# FASCICULE DE BREVET EUROPEEN

(11) **EP 4 130 496 B1**
(45) Date de publication et mention de la délivrance du brevet: **07.01.2026**
(21) Numéro de dépôt: 22188820.9
(22) Date de dépôt: 04.08.2022
(51) Int. Cl.: F16B 5/02, F16B 39/24

(54) **ENSEMBLE COMPRENANT UN SUPPORT, UNE PIÈCE RAPPORTÉE SUR LE SUPPORT ET UN JOINT ENTRE LE SUPPORT ET LA PIÈCE, PROCÉDÉ D ASSEMBLAGE ASSOCIÉ**
EINHEIT AUS EINEM TRÄGER, EINEM AUF DIESEM TRÄGER ANGEBRACHTEN TEIL UND EINER VERBINDUNG ZWISCHEN DEM TRÄGER UND DEM TEIL SOWIE ENTSPRECHENDES MONTAGEVERFAHREN
ASSEMBLY COMPRISING A SUPPORT, PART ADDED TO THE SUPPORT AND A JOINT BETWEEN THE SUPPORT AND THE PART, METHOD FOR ASSEMBLY THEREOF

(30) Priorité: 05.08.2021 FR 2108517
(43) Date de publication de la demande: 08.02.2023
(73) Titulaire: ALSTOM Holdings, 93400 Saint-Ouen-sur-Seine (FR)
(72) Inventeur: FUHRMANN, Renaud, 90800 BAVILLIERS (FR)
(74) Mandataire: Plasseraud IP

(56) Documents cités:
- US-A- 5 054 793
- US-A1- 2014 312 574
- US-A1- 2020 072 402

## Description

La présente invention concerne un ensemble du type comprenant un support, une pièce rapportée sur le support et au moins deux vis de fixation de la pièce sur le support, engagées chacune au travers d'un perçage de la pièce et vissée dans un taraudage du support suivant un axe de vissage, l'ensemble comportant un joint entre le support et la pièce, le joint comportant au moins deux orifices traversés par les vis.

La présente invention concerne également un procédé d'assemblage de l'ensemble.

On connait des document US 2014/312574 A1 et US 2020/07402 A1 des ensembles comprenant un support et une pièce rapportée sur le support.

Dans les véhicules de transport ferroviaire et routier, il est connu de fixer un coffret désigné communément par sous-caisse sur un châssis du véhicule routier ou sur un bogie d'une rame du véhicule ferroviaire à l'aide de vis de fixation.

La sous-caisse, en forme de cuvette, est retenue contre la surface du châssis ou du bogie par vissage de sa collerette périphérique en appui sur la surface. La sous-caisse et le châssis forment alors un espace hermétique recevant par exemple des équipements électriques.

Pour rendre la jonction hermétique, un joint est intercalé entre le châssis ou le bogie et la collerette de la sous-caisse. Le joint est traversé par les vis de fixation qui sont serrées dans des taraudages du châssis ou du bogie, comprimant ainsi le joint pour garantir l'étanchéité.

Toutefois, un maintien en compression du joint trop élevé provoque le fluage de ce dernier nécessitant un resserrage régulier des vis de fixation pour conserver l'étanchéité de la liaison. Un tel resserrage accentue alors le fluage du joint.

Un but de l'invention est donc de proposer une solution pour limiter le fluage du joint tout en garantissant une bonne étanchéité.

A cet effet, l'invention a pour objet un ensemble selon la revendication 1.

Suivant des modes particuliers de réalisation, l'ensemble est selon l'une quelconque des revendications 2 à 6.

L'invention a également pour objet un procédé d'assemblage selon la revendication 7.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

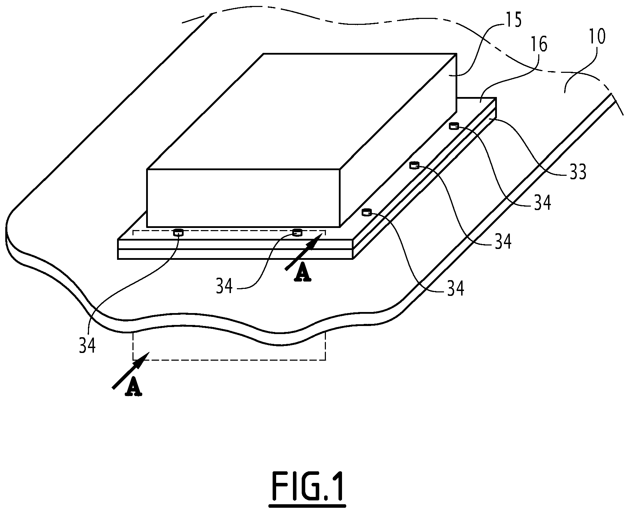

- [Fig 1] la figure 1 est une vue en perspective d'un ensemble comprenant un châssis et une sous-caisse d'un véhicule,

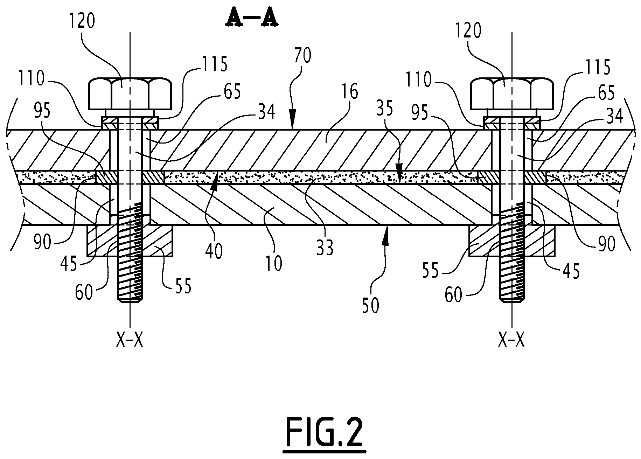

- [Fig 2] la figure 2 est une coupe de l'ensemble selon un plan A-A comprenant les axes de vissage de vis de fixation de l'ensemble de la figure 1, l'ensemble étant assemblé, et

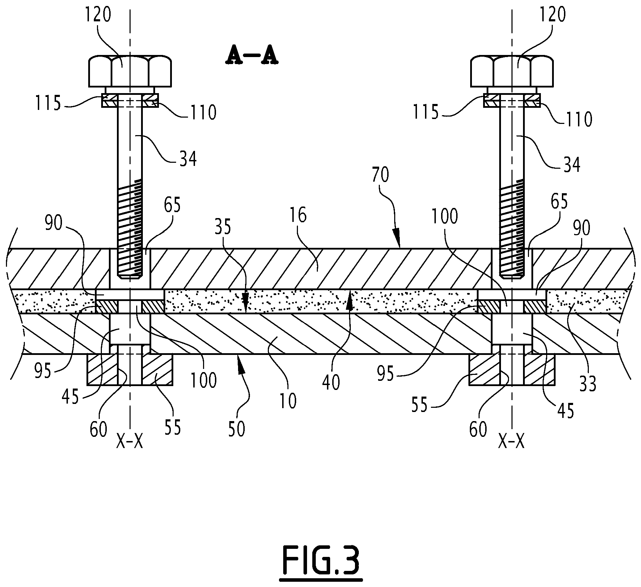

- [Fig 3] la figure 3 est une coupe de l'ensemble de la figure 2 selon le même plan A-A avant assemblage de l'ensemble.

Un véhicule ferroviaire ou un véhicule routier comporte un châssis 10 sur lequel est fixée une sous-caisse 15 formant ensemble un boitier étanche propre à recevoir des équipements électriques par exemple. Dans la suite, le châssis 10 est également appelé « support » et la sous-caisse 15 est également appelée « pièce ».

La sous-caisse 15 a une forme d'auge ou de cuvette et présente à sa périphérie une collerette 16.

Un joint annulaire 33 de profil identique à celui de la collerette 16 est interposé entre la collerette 16 et le châssis 10. Des vis 34 assurent la liaison de la collerette 16 et du châssis 10, et assurent la compression du joint 33 entre eux.

Le châssis 10 et la collerette 16 de la sous-caisse 15 sont en regard l'un de l'autre via respectivement une face de réception 35 pour le châssis 10 et une face d'appui 40 pour la collerette 16 de la sous-caisse 15. Les faces de réception 35 et d'appui 40 sont avantageusement planes et sensiblement parallèles entre elles.

Suivant toute la périphérie de la collerette 16, des trous 45 circulaires sont ménagés dans le châssis 10. Chaque trou 45 traverse le châssis 10 de part en part, entre la face de réception 35 et une face opposée 50. Les trous 45 sont d'axe X-X perpendiculaire à la face de réception 35. Leur diamètre est compris entre 4 mm et 11 mm et par exemple égal à 7 mm.

Le châssis 10 comprend dans le prolongement de chaque trou 45, un écrou 55. Chaque écrou 55 est soudé à la face opposée 50. Chaque écrou 55 est coaxial du trou 45 qui lui est associé. Chaque écrou 55 définit un taraudage 60 du châssis 10 destiné à recevoir une vis 34. L'axe X-X est donc un axe de vissage.

La collerette 16 de la sous-caisse 15 comprend des perçages 65 la traversant de part en part de la face d'appui 40 à une face antagoniste 70. Chaque perçage 65 de la collerette 16 est coaxial d'un trou 45 du châssis 10 et de même diamètre.

Le joint 33 est réalisé en élastomère. Il est plan et de forme annulaire. Son épaisseur au repos E est comprise en 3 mm et 6 mm et préférentiellement égale à 5 mm.

Le joint 33 est en contact d'une part avec la face de réception 35 du châssis 10, et d'autre part avec la face d'appui 40 de la collerette 16 de la sous-caisse 15. Le joint 33 comprend des orifices 90 le traversant de part en part et débouchant chacun d'une part sur la face de réception 35 du châssis 10, et d'autre part sur la face d'appui 40 de la collerette 16. Chaque orifice 90 est coaxial d'un trou 45 et d'un perçage 65.

Chaque orifice 90 du joint 33 définit une géométrie circulaire dont un diamètre est supérieur aux diamètres internes du perçage 65 et du trou 45 qui lui sont associés. Le diamètre de chaque orifice 90 est généralement compris entre 8 mm et 15 mm, et égal à 10 mm dans l'exemple précité.

L'ensemble comportant le châssis 10, la sous-caisse 15 et le joint 33, comprend en outre deux bagues 95 chacune reçue dans un des orifices 90 du joint 33. Chaque bague 95 a un diamètre externe sensiblement égal au diamètre interne de l'orifice 90 qui lui est associé. Le passage central 100 est circulaire et de diamètre inférieur ou égal aux diamètres du trou 45 et du perçage 65 qui lui sont associés. La hauteur H de la bague 95 selon l'axe de vissage X-X est inférieure à l'épaisseur au repos E du joint 33. Un ratio entre l'épaisseur au repos E du joint 33 et la hauteur H de chaque bague 95 est préférentiellement compris entre 1,2 et 1,5.

Chaque bague 95 est de préférence réalisée en métal.

Le diamètre de chaque passage central 100 est compris entre 5,5 mm et 12 mm, et par exemple égal à 6,5 mm. La hauteur H de chaque bague 95 est comprise entre 2 mm et 5 mm. Dans l'exemple où l'épaisseur au repos E du joint 33 est égale à 5 mm, la hauteur H de chaque bague 95 est égale à 4 mm.

Lorsque les vis 34 sont serrées, chaque bague 95 est en contact d'une part avec la face de réception 35 du châssis 10, et d'autre part avec la face d'appui 40 de la collerette 16 par compression du joint 33.

Le maintien du châssis 10 et de la sous-caisse 15 ensemble, et le maintien en compression du joint 33 sont assurés par les vis de fixation 34. Chaque vis 35 est engagée respectivement dans un perçage 65 de la collerette 16, un passage 100 d'une bague 95, un trou 45 du châssis 10 et est vissée dans l'écrou 55 associé.

Le diamètre de chaque vis de fixation 34 est compris entre 5 mm et 10 mm et, dans l'exemple précité, égal 6 mm.

L'ensemble comprend en outre, pour chaque vis de fixation 34, une rondelle de freinage 110 et une rondelle plate 115 entre la collerette 16 est une tête 120 de la vis 34. La rondelle de freinage 110 est en contact avec la face antagoniste 70 à la face d'appui 40 de la collerette 16.

Lors de l'assemblage, le joint 33 est positionné contre la face de réception 35 du châssis 10 de manière à aligner les orifices 90 du joint 33 avec les trous 45 du châssis 10.

Chaque bague 95 est ensuite insérée dans un orifice 90 du joint 33 et mise en contact avec la face de réception 35 du châssis 10.

La sous-caisse 15 est ensuite placée contre le joint 33 via la face d'appui 40 de sa collerette 16, de manière à aligner les perçages 65 de la collerette 16 avec les passages 100 de chaque bague 95.

Chaque vis de fixation 34, munie d'une rondelle plate 115 et d'une rondelle de freinage 110, est engagée dans un perçage 65 de la collerette 16, dans un passage 100 d'une bague 95, et dans un trou 45 du châssis 10. La rondelle de freinage 110 est en appui sur la face antagoniste 70 à la face d'appui 40 de la collerette 16.

Chaque vis de fixation 34 est alors serrée le long de l'écrou 55 associé au trou 45 dans lequel elle est engagée jusqu'à ce que la face d'appui 40 soit en contact avec chaque bague 95. La collerette 16 comprime alors le joint 33 via le contact entre la face d'appui 40 de la collerette 16 et le joint 33.

Ainsi, l'invention permet de limiter la compression du joint 33 et donc d'en limiter le fluage. L'invention permet également de limiter la détérioration du joint 33, augmentant ainsi la durée de vie du joint 33.

Avec l'ensemble selon l'invention, l'étanchéité est garantie par une compression contrôlée du joint 33.

De plus, les rondelles de freinage 110 permettent de limiter le desserrage des vis de fixation 34 et donc de conserver l'étanchéité et le maintien de l'ensemble.

La réalisation des bagues 95 en métal permet de garantir qu'elles ne se déforment pas suite au serrage de chaque vis de fixation 34 dans un écrou 55.

La géométrie plane du châssis 10 et de la collerette 16, notamment au niveau des faces de réception 35 et d'appui 40, permet de garantir un écrasement homogène du joint 33 et donc une bonne étanchéité de la liaison.

En outre, la réalisation des taraudages 60 à l'aide d'écrous 55 soudés au châssis 10 dans le prolongement des trous 45, permet de simplifier la fabrication du châssis 10. En effet, les trous 45 dans le châssis 10 peuvent être réalisés sans contrainte sur le diamètre des vis de fixation 34 qu'ils seront amenés à recevoir. Le taraudage 60 est ajusté au diamètre de chaque vis de fixation 34 reçue, par le choix de l'écrou 55 monté sur le châssis 10. Cette solution est en outre avantageuse par rapport à un simple écrou 55 dans le cas où la face opposée 50 à la face de réception 35 du châssis 10 est difficilement accessible.

## Revendications

1. Ensemble comprenant un support (10), une pièce (15) rapportée sur le support (10) et au moins deux vis de fixation (34) de la pièce (15) sur le support (10), engagées chacune au travers d'un perçage (65) de la pièce (15) et vissée dans un taraudage (60) du support (10) suivant un axe de vissage (X-X), l'ensemble comportant un joint (33) entre le support (10) et la pièce (15), le joint (33) comportant au moins deux orifices (90) traversés par les vis (34),
l'ensemble comprenant au moins deux bagues indéformables (95) reçues chacune par un orifice (90) respectif du joint (33), chaque bague (95) définissant un passage (100) traversé par une des vis (34), chaque bague (95) ayant une hauteur (H) selon l'axe de vissage (X-X) inférieure ou égale à une épaisseur au repos (E) du joint (33), les vis (34) étant serrées de sorte que le support (10) et la pièce (15) rapportée s'appuient sur chaque bague (95), le support (10) étant pourvu de trous (45) de passage de vis (34), et
d'écrous (55) dans le prolongement des trous (45), lesquels écrous (55) définissent les taraudages (60) dans lesquels sont vissées les vis (34),
**caractérisé en ce que** les écrous (55) sont soudés dans le prolongement des trous (45),
et **en ce que** le support (10) est un châssis de véhicule ferroviaire, et la pièce (15) est une sous-caisse d'une rame de véhicule ferroviaire.

2. Ensemble selon la revendication 1, **caractérisé en ce que** chaque vis (34) comprend une tête de vis (120), et **en ce que** l'ensemble comprend en outre au moins une rondelle de freinage (110) entre la tête de vis (120) et la pièce (15).

3. Ensemble selon la revendication 1 ou 2, **caractérisé en ce que** les bagues (95) sont en métal.

4. Ensemble selon l'une quelconque des revendications précédentes, **caractérisé en ce que** le support (10) et la pièce (15) définissent respectivement une face de réception (35) et une face d'appui (40) chacune en contact avec chaque bague (95) et le joint (33), les faces de réception (35) et d'appui (40) étant sensiblement planes et substantiellement parallèles entre elles.

5. Ensemble selon l'une quelconque des revendications précédentes, **caractérisé en ce qu'**un diamètre de chaque vis (34) est compris entre 5 mm et 10 mm et **en ce que** chaque passage (100) est circulaire en section de diamètre compris entre 5,5 mm et 12 mm.

6. Ensemble selon l'une quelconque des revendications précédentes, **caractérisé en ce qu'**un ratio entre l'épaisseur au repos (E) du joint (33) et la hauteur (H) de la bague (95) est compris entre 1,2 et 1,5.

7. Procédé d'assemblage de l'ensemble selon l'une quelconque des revendications précédentes, comprenant les étapes suivantes :
- positionnement du joint (33) contre une face de réception (35) du support (10) de sorte que les orifices (90) du joint (33) soient alignés avec les taraudages (60) du support (10),
- placement de la pièce (15) contre le joint (33) via une face d'appui (40) de la pièce (15) de sorte que les perçages (65) de la pièce (15) soient alignés avec les orifices (90) du joint (33),
- engagement de chaque vis (34) à travers un perçage (65) respectif de la pièce (15), et un orifice (90) respectif du joint (33),
- vissage de chaque vis (34) dans le taraudage (60) du support (10) associé à l'orifice (90) et au perçage (65) traversé par ladite vis (34),
où le procédé comprend une étape d'insertion de chaque bague (95) dans un des orifices (90) du joint (33),
lors de l'étape d'engagement, chaque vis (34) traverse un orifice (90) du joint (33) par le passage (100) de la bague (95) associée, et
lors de l'étape de vissage, chaque vis (34) étant vissée dans le taraudage (60) respectif du support (10) jusqu'à ce que la pièce (15) et le support (10) soient respectivement en contact avec chaque bague (95).

## Patentansprüche

1. Anordnung, umfassend eine Halterung (10), ein Teil (15), welches an der Halterung (10) angebracht ist, und wenigstens zwei Schrauben zum Befestigen (34) des Teils (15) an der Halterung (10), welche jeweils durch eine Bohrung (65) des Teils (15) hindurchgeführt und in ein Gewinde (60) der Halterung (10) entlang einer Einschraubachse (X-X) eingeschraubt sind, wobei die Anordnung eine Dichtung (33) zwischen der Halterung (10) und dem Teil (15) umfasst, wobei die Dichtung (33) wenigstens zwei Öffnungen (90) umfasst, welche von den Schrauben (34) durchdrungen sind,
wobei die Anordnung wenigstens zwei unverformbare Ringe (95) umfasst, welche jeweils von einer entsprechenden Öffnung (90) der Dichtung (33) aufgenommen sind, wobei jeder Ring (95) einen Durchgang (100) definiert, welcher von einer der Schrauben (34) durchquert ist, wobei jeder Ring (95) eine Höhe (H) entlang der Einschraubachse (X-X) aufweist, welche kleiner oder gleich einer Dicke in Ruhe (E) der Dichtung (33) ist, wobei die Schrauben (34) derart angezogen sind, dass sich die Halterung (10) und das Teil (15) auf jedem Ring (95) abstützen,
wobei die Halterung (10) mit Löchern (45) zum Durchgang von Schrauben (34) und mit Muttern (55) in Verlängerung der Löcher (45) versehen ist, wobei die Muttern (55) die Gewinde (60) bilden, in welchen die Schrauben (34) eingeschraubt sind,
**dadurch gekennzeichnet, dass** die Muttern (55) in Verlängerung der Löcher (45) verschweißt sind und dass die Halterung (10) ein Schienenfahrzeugrahmen ist und das Teil (15) ein Untergestell eines Schienenfahrzeugzuges ist.

2. Anordnung nach Anspruch 1, **dadurch gekennzeichnet, dass** jede Schraube (34) einen Schraubenkopf (120) umfasst und dass die Anordnung außerdem wenigstens eine Sicherungsscheibe (110) zwischen dem Schraubenkopf (120) und dem Teil (15) umfasst.

3. Anordnung nach Anspruch 1 oder 2, **dadurch gekennzeichnet, dass** die Ringe (95) aus Metall bestehen.

4. Anordnung nach einem der vorstehenden Ansprüche, **dadurch gekennzeichnet, dass** die Halterung (10) und das Teil (15) jeweils eine Aufnahmefläche (35) und eine Auflagefläche (40) definieren, welche jeweils mit jedem Ring (95) und der Dichtung (33) in Kontakt stehen, wobei die Aufnahmeflächen (35) und die Auflageflächen (40) im Wesentlichen eben und im Wesentlichen parallel zueinander sind.

5. Anordnung nach einem der vorstehenden Ansprüche, **dadurch gekennzeichnet, dass** ein Durchmesser jeder Schraube (34) zwischen 5 mm und 10 mm liegt und dass jeder Durchgang (100) im Querschnitt kreisförmig ist und einen Durchmesser zwischen 5,5 mm und 12 mm aufweist.

6. Anordnung nach einem der vorstehenden Ansprüche, **dadurch gekennzeichnet, dass** ein Verhältnis zwischen der Dicke in Ruhe (E) der Dichtung (33) und der Höhe (H) des Rings (95) zwischen 1,2 und 1,5 liegt.

7. Verfahren zum Zusammenbau der Anordnung nach einem der vorstehenden Ansprüche, umfassend die folgenden Schritte:
- Positionieren der Dichtung (33) an einer Aufnahmefläche (35) der Halterung (10), so dass die Öffnungen (90) der Dichtung (33) mit den Gewinden (60) der Halterung (10) ausgerichtet sind,
- Platzieren des Teils (15) an der Dichtung (33) über eine Auflagefläche (40) des Teils (15), so dass die Bohrungen (65) des Teils (15) mit den Öffnungen (90) der Dichtung (33) ausgerichtet sind,
- Eindrehen jeder Schraube (34) durch eine entsprechende Bohrung (65) des Teils (15) und eine entsprechende Öffnung (90) der Dichtung (33),
- Einschrauben jeder Schraube (34) in das Gewinde (60) der Halterung (10), welche der Öffnung (90) und der von der Schraube (34) durchquerten Bohrung (65) zugeordnet ist, wobei das Verfahren einen Schritt des Einführens jedes Rings (95) in eine der Öffnungen (90) der Dichtung (33) umfasst,
wobei in dem Schritt des Eindrehens jede Schraube (34) eine Öffnung (90) der Dichtung (33) durch den Durchgang (100) des zugehörigen Rings (95) durchquert, und
in dem Schritt des Einschraubens jede Schraube (34) in das jeweilige Gewinde (60) der Halterung (10) geschraubt wird, bis das Teil (15) und die Halterung (10) jeweils mit jedem Ring (95) in Kontakt stehen.

## Claims

1. Assembly comprising a support (10), a part (15) attached to the support (10), and at least two screws (34) for fastening the part (15) to the support (10), each screw passing through a hole (65) in the part (15) and being screwed into a threaded hole (60) in the support (10) along a screwing axis (X-X), the assembly including a seal (33) between the support (10) and the part (15), with the seal (33) including at least two openings (90) through which the screws (34) pass,
the assembly comprising at least two non-deformable rings (95), each received by a respective opening (90) of the seal (33), each ring (95) defining a passage (100) through which one of the screws (34) passes, each ring (95) having a height (H) along the screwing axis (X-X) that is less than or equal to a resting thickness (E) of the seal (33), the screws (34) being tightened so that the support (10) and the attached part (15) rest on each ring (95), the support (10) being equipped with holes (45) for the passage of screws (34), and nuts (55) extending from the holes (45), which nuts (55) define the threaded holes (60) into which the screws (34) are screwed, **characterised in that** the nuts (55) are welded in the extension of the holes (45), and **in that** the support (10) is a rail vehicle chassis, and the part (15) is a sub-frame of a rail vehicle train.

2. Assembly according to Claim 1, **characterised in that** each screw (34) comprises a screw head (120), and **in that** the assembly further comprises at least one lock washer (110) between the screw head (120) and the part (15).

3. Assembly according to Claim 1 or 2, **characterised in that** the rings (95) are made of metal.

4. Assembly according to any one of the preceding claims, **characterised in that** the support (10) and the part (15) respectively define a receiving face (35) and a bearing face (40), each in contact with each ring (95) and the seal (33), the receiving face (35) and bearing face (40) being substantially flat and substantially parallel to one another.

5. Assembly according to any one of the preceding claims, **characterised in that** a diameter of each screw (34) is between 5 mm and 10 mm, and that each passage (100) has a circular cross-section with a diameter ranging from 5.5 mm to 12 mm.

6. Assembly according to any one of the preceding claims, **characterised in that** a ratio of the resting thickness (E) of the seal (33) to the height (H) of the ring (95) is between 1.2 and 1.5.

7. Method for assembling the assembly according to any one of the preceding claims, comprising the following steps:
- positioning the seal (33) against a receiving face (35) of the support (10) so that the openings (90) of the seal (33) are aligned with the threaded holes (60) of the support (10),
- positioning the part (15) against the seal (33) using a bearing face (40) of the part (15) so that the holes (65) in the part (15) align with the openings (90) in the seal (33),
- engagement of each screw (34) through a respective hole (65) in the part (15), and a respective opening (90) in the seal (33),
- screwing each screw (34) into the threaded hole (60) of the support (10) associated with the opening (90) and the hole (65) through which said screw (34) passes,
wherein the method comprises a step of inserting each ring (95) into one of the openings (90) in the seal (33), during the engagement step, each screw (34) passes through an opening (90) in the seal (33) through the passage (100) of the associated ring (95), and
during the screwing step, each screw (34) being screwed into the respective threaded hole (60) of the support (10) until the part (15) and the support (10) are respectively in contact with each ring (95).
